# EUROPEAN PATENT APPLICATION

(11) **EP 4 428 713 A1**
(43) Date of publication of application: **11.09.2024**
(21) Application number: 23203366.2
(22) Date of filing: 13.10.2023
(51) Int. Cl.: G06F 16/27, G06F 16/25

(54) **AUTOMATIC DATA FEDERATION/REPLICATION TOGGLE**

(30) Priority: 09.03.2023 US 202318119436
(71) Applicant: SAP SE, 69190 Walldorf (DE)
(72) Inventor: Bos, Daniel, 69190 Walldorf (DE); Schoenau, Peter, 69190 Walldorf (DE); Karpstein, Tobias, 69190 Walldorf (DE)
(74) Representative: Müller-Boré & Partner Patentanwälte PartG mbB

(57) **Abstract**

Example methods and systems are directed to automatically toggling between replication and federation for access for data received from remote sources. The system may initially use a fully federated strategy, so that results for any query can be generated. Based on one or more of predefined criteria, analysis of the queries being performed, network performance data, and other factors, data sets that would benefit from replication are identified. The identified data sets are accessed from the remote source and replicated in local storage. Future queries for replicated data are satisfied by accessing the replicated data. Other queries continue to be served using federation. After replication has begun, analysis of the benefits of replication may continue. When replication is no longer a net benefit, the local data may be deleted and further access of the data provided through federation.

## Description

### TECHNICAL FIELD

The subject matter disclosed herein generally relates to distributed data systems. Specifically, the present disclosure addresses systems and methods to automatically toggle between federating and replicating data stored in remote systems.

### BACKGROUND

Data stored on remote systems may be accessed using federation. When federated data access is used, data requests for remote data are forwarded to the remote hosts. This reduces local storage but increases response time.

Alternatively, data stored on remote systems may be accessed using replication. When replicated data access is used, the remote data is copied locally so that it can be quickly accessed in response to local queries. This decreases response time but increases the use of local storage.

### BRIEF DESCRIPTION OF THE DRAWINGS

FIG. 1 is a network diagram illustrating an example network environment suitable for automatically toggling between replication and federation of data from remote data sources.
FIG. 2 is a block diagram of an application server, suitable for automatically toggling between replication and federation of data from remote data sources, according to some example embodiments.
FIG. 3 is a flow diagram showing intermediating relationships between an application and data sources to support both replication and federation of data, according to some example embodiments.
FIG. 4 is a block diagram of an example database schema suitable for use by a system that automatically toggles between replication and federation of data from remote data sources.
FIG. 5 is a flowchart illustrating operations of an example method suitable for automatically toggling between replication and federation of data from remote data sources.
FIG. 6 is a block diagram showing one example of a software architecture for a computing device.
FIG. 7 is a block diagram of a machine in the example form of a computer system within which instructions may be executed for causing the machine to perform any one or more of the methodologies discussed herein.

### DETAILED DESCRIPTION

Example methods and systems are directed to automatically toggling between replication and federation for access for data received from remote sources. The system may initially use a fully federated strategy, so that results for any query can be generated. Based on one or more of predefined criteria, analysis of the queries being performed, network performance data, and other factors, data sets that would benefit from replication are identified. The identified data sets are accessed from the remote source and replicated in local storage. Future queries for replicated data are satisfied by accessing the replicated data. Other queries continue to be served using federation.

Replication could be for all data from a particular data source, for a subset of the data using a division used by the particular data source (e.g., replicating a complete file, directory, or table), or for another division. For example, a partial replication using a filter (replicating only some rows of a table), a projection (replicating only some columns of a table), an aggregation (replicating aggregated values (e.g., sums) that depend on multiple rows of a table), or any suitable combination thereof may be performed.

After replication has begun, analysis of the benefits of replication may continue. When replication is no longer a net benefit (e.g., the cost of local storage is not matched by the frequency with which the stored data is accessed), the local data may be deleted and further access of the data provided through federation.

The data may be accessed using a data access interface that does not expose whether the data is handled using replication or federation. Thus, an application does not need to specify whether data should be accessed from local storage or from a remote data source, simplifying the application and saving effort involved in developing the application. Additionally, using replication saves network resources compared with using federation, as fewer queries and results are sent over the network. Using federation instead of replication saves local storage resources, as less data is saved locally. Using the systems and methods described herein, in which data is automatically switched from being replicated to being federated and vice versa, improves over both systems that only federate and systems that only replicate by balancing the advantages of lower network usage and data latency with the advantages of lower network storage consumption.

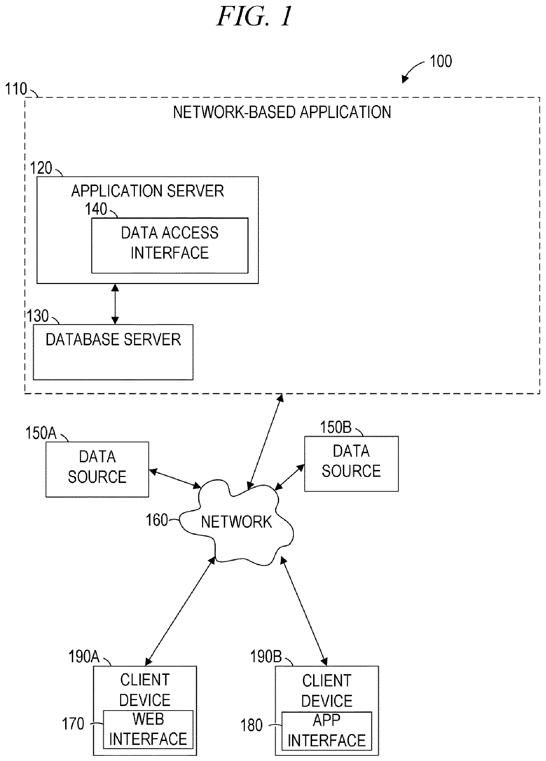

FIG. 1 is a network diagram illustrating an example network environment 100 suitable for automatically toggling between replication and federation of data from remote data sources. The network environment 100 includes a network-based application 110, client devices 190A and 190B, data sources 150A and 150B, and a network 160. The network-based application 110 is provided by application server 120 using a data access interface 140, in communication with a database server 130 and the remote data sources 150A and 150B. The application server 120 accesses application data (e.g., application data stored by the database server 130, the data source 150A, or the data source 150B) to provide one or more applications to the client devices 190A and 190B via a web interface 170 or an application interface 180.

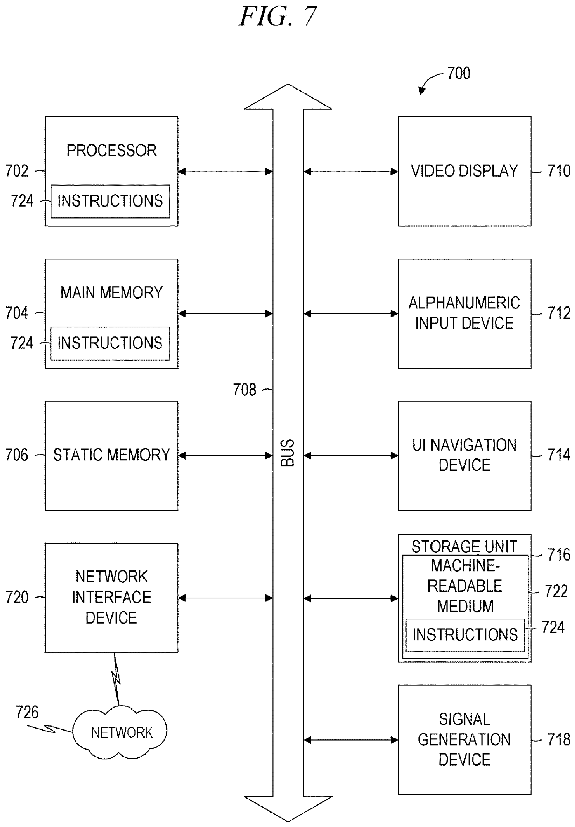

The application server 120, the database server 130, the data sources 150A and 150B, and the client devices 190A and 190B may each be implemented in a computer system, in whole or in part, as described below with respect to FIG. 7. The client devices 190A and 190B may be referred to collectively as client devices 190 or generically as a client device 190.

Users of the network-based application 110 may generate reports that combine data from the data sources 150A and 150B. For example, a report that correlates weather forecasts with electricity usage may gather weather data from data source 150A and electricity data from data source 150B. As another example, a report that includes business data from multiple divisions may gather data for one division from data source 150A and data for a different division from data source 150B.

Any of the machines, databases, or devices shown in FIG. 1 may be implemented in a general-purpose computer modified (e.g., configured or programmed) by software to be a special-purpose computer to perform the functions described herein for that machine, database, or device. For example, a computer system able to implement any one or more of the methodologies described herein is discussed below with respect to FIG. 7. As used herein, a "database" is a data storage resource and may store data structured as a text file, a table, a spreadsheet, a relational database (e.g., an object-relational database), a triple store, a hierarchical data store, a document-oriented NoSQL database, a file store, or any suitable combination thereof. The database may be an in-memory database. Moreover, any two or more of the machines, databases, or devices illustrated in FIG. 1 may be combined into a single machine, database, or device, and the functions described herein for any single machine, database, or device may be subdivided among multiple machines, databases, or devices.

The application server 120, the database server 130, the data sources 150A and 150B, and the client devices 190A-190B are connected by the network 160. The network 160 may be any network that enables communication between or among machines, databases, and devices. Accordingly, the network 160 may be a wired network, a wireless network (e.g., a mobile or cellular network), or any suitable combination thereof. The network 160 may include one or more portions that constitute a private network, a public network (e.g., the Internet), or any suitable combination thereof.

Though FIG. 1 shows only one or two of each element (e.g., one network-based application 110, two data sources 150A-150B, and the like), any number of each element is contemplated. For example, the application server 120 may access data from dozens or hundreds of data sources and provide an application to millions of client devices. Likewise, each data source may provide data to hundreds or thousands of applications.

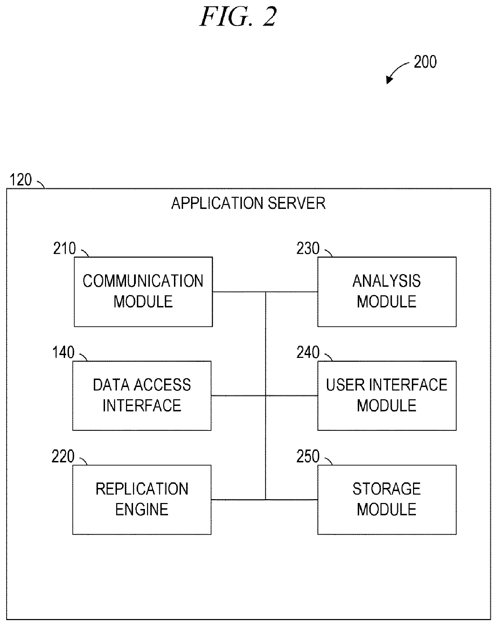

FIG. 2 is a block diagram of the application server 120, suitable for automatically toggling between replication and federation of data from remote data sources, according to some example embodiments. The application server 120 is shown as including a communication module 210, the data access interface 140, a replication engine 220, an analysis module 230, a user interface module 240, and a storage module 250, all configured to communicate with each other (e.g., via a bus, shared memory, or a switch). Any one or more of the modules described herein may be implemented using hardware (e.g., a processor of a machine). For example, any module described herein may be implemented by a processor configured to perform the operations described herein for that module. Moreover, any two or more of these modules may be combined into a single module, and the functions described herein for a single module may be subdivided among multiple modules. Furthermore, modules described herein as being implemented within a single machine, database, or device may be distributed across multiple machines, databases, or devices.

The communication module 210 receives data sent to the application server 120 and transmits data from the application server 120. For example, the communication module 210 may receive, from the client device 190A or 190B, a request to generate a report based on data from the data sources 150A or 150B.

The data access interface 140 provides an abstraction layer to allow an application running on the application server 120 to access data without being concerned with where the data is stored. For example, the data may be stored on local storage of the application server 120 (e.g., a hard drive or in-memory database), on local storage of the database server 130, or on a storage device of the data source 150A or 150B. When federation is used, the data is accessed from a remote device, and when replication is used, the data is accessed locally. However, this change is transparent to the application using the data access interface 140.

The replication engine 220 copies data from the data sources 150A and 150B if the data is being replicated. When the data is no longer replicated, the data is deleted and further requests for the data are handled using federation.

Transitions between replication and federation are controlled by the analysis module 230. The analysis module 230 may determine to replicate data when a number of requests for the data exceed a predetermined threshold within a predetermined period of time. For example, data requested more than twice per hour may be replicated instead of federated. The criteria for continuing to replicate data may be the same as the criteria to initiate replication. For example, as long as the rate of use of the replicated data is maintained above the predetermined threshold, replication is continued. Alternatively, the criteria for switching back to federation may be different than the criteria to initiate replication, creating a hysteresis loop. For example, two requests per hour may initiate replication, but once begun, replication may continue until the request rate drops below one request per hour.

Other criteria may also be used in determining when to switch between replication and federation. For example, a maximum amount of data to replicate may be available. If more than the maximum amount of data exceeds the data access rate threshold, some data is selected for federation. The selection of data for federation may be based on the frequency of access of the data, the size of the data, the geographical region of the data, the geographical region of the application server 120, user usage-patterns, expected user usage-pattern changes, the latency between when data is updated at the remote data source and when the data is updated locally if it is replicated, or any suitable combination thereof.

A user interface for generating reports or otherwise accessing data is provided by the application server 120 using the user interface module 240. For example, a hypertext markup language (HTML) document may be generated by the user interface module 240, transmitted to a client device 190 by the communication module 210, and rendered on a display device of the client device 190 by a web browser executing on the client device 190. The user interface may comprise text fields, drop-down menus, and other inputs fields. The user interface may also comprise a progress report, show names and paths of original files, show names and paths of copied files, or any suitable combination thereof.

Search queries, search results, input files, output files, network performance data, or any suitable combination thereof may be stored and accessed by the storage module 250. For example, local storage of the application server 120, such as a hard drive, may be used. As another example, network storage may be accessed by the storage module 250 via the network 160.

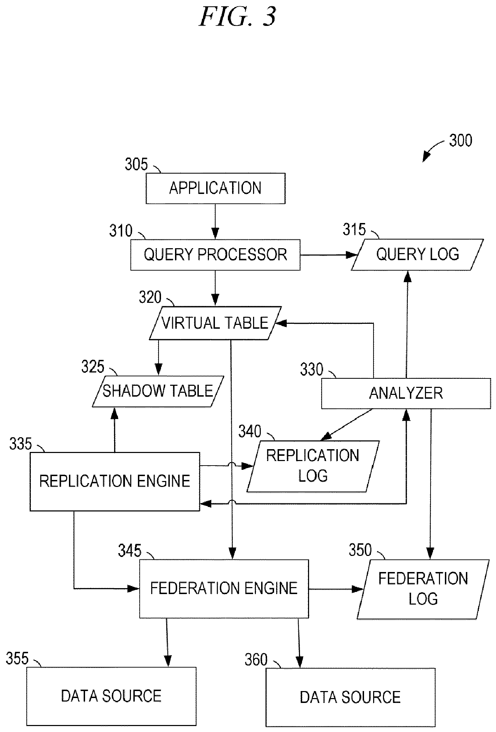

FIG. 3 is a flow diagram 300 showing intermediating relationships between an application 305 and data sources 355 and 360 to support both replication and federation of data, according to some example embodiments. The application 305 (e.g., an application running on the application server 120 of FIGS. 1-2) indirectly accesses data from the data sources 355 and 360 (e.g., the data sources 150A and 150B of FIG. 1).

The application 305 sends a request for data (e.g., a structured query language (SQL) query) to a query processor 310. The query processor 310 logs the request to the query log 315 and requests the data from a virtual table 320. The virtual table 320 is a unified interface for the data whether it is replicated or federated. If the requested data is being replicated, the data is accessed from a shadow table 325. If the requested data is not being replicated, the data is requested from the federation engine 345. Thus, the handling of the queries for data may comprise providing a virtual table for the data that allows access to the data whether the data is stored remotely or locally.

As an example, the query processor 310 may receive the query "SELECT o.Customer, i.Product, SUM(i.Quantity) FROM Orders o JOIN OrderItems i ON o.Order = i.Order GROUP BY o.Customer, i.Product". The query processor 310 may store the entirety of the query in the query log 315 for analysis by the analyzer 330. Alternatively, relevant data regarding the query may be extracted by the query processor 310 and stored in the query log. Analysis of the query reveals information about the data being accessed. For example, the only columns of the dataset Orders that are accessed are Customer and Order. Thus, replication of data to support this query may be a projection of the dataset Orders that replicates those two columns and does not replicate other columns. The query selects rows of the dataset Orders based only on the Order column. Thus, indexing of the replicated data using the Order column will improve performance as compared with unindexed data or data indexed using the Customer column. Selection of the index column to use for the replicated data may be dependent on the query.

Analysis of the query also reveals that, for the dataset OrderItems, the only columns accessed are Order, Product, and Quantity. Accordingly, a projection with only these columns may be replicated. As with the dataset Orders, the index column for the dataset OrderItems is Order.

The query includes an inner join on "o.Order = i.Order." Replicated data may be stored pre-joined according to this criteria. As a result, future queries for data using the same join may be processed more quickly. The result set is based on Orders. Customer, OrderItems.Product, and OrderItems.Quantity and uses an aggregation of the OrderItems.Quantity value that depends on both the Orders. Customer column and the OrderItems.Product column. This data may also be used to precompute and store the aggregated values, further improving the speed of processing the query in the future.

When the federation engine 345 receives a request for federated data, the request is logged in the federation log 350. The request is handled by requesting the data from the data source 355 or 360. The requested data is provided as results for the request to the virtual table 320. Additional data regarding the servicing of the request may be stored in the federation log 350. For example, an amount of data retrieved (e.g., a number of rows, a number of fields, a number of megabytes, or any suitable combination thereof), an amount of time to handle the request (e.g., a number of seconds between sending a request to a remote data source 355 or 360 and completing the receipt of responsive data from the remote data source 355 or 360), or both may be stored in the federation log 350.

To control transitions between federation and replication, the analyzer 330 accesses data in the query log 315, a replication log 340, and the federation log 350. For example, the federation log 350 may be analyzed to identify requests that are processed frequently (e.g., more often than a predetermined threshold) and take a long time (e.g., more time than a second predetermined threshold). The analyzer 330 informs the replication engine 335 of any data selected for replication. The data selected for federation may be a filter, a projection, an aggregation, or any suitable combination thereof.

When data is selected for replication, the replication engine 335 sends a request to the federation engine 345 to access the data from the appropriate remote data source 355 or 360. The retrieved data is stored in the shadow table 325. As a result, future data accesses to the virtual table 320 will receive the data from the shadow table 325 instead of using the federation engine 345, improving the responsiveness of data queries from the application 305. Thereafter, the data source 355 or 360 may inform the replication engine 335 when data changes, allowing the replication engine 335 to request the updated data. Alternatively, the replication engine 335 may periodically (e.g., once per minute, once per hour, or once per day) request updated data from the data sources 355 and 360.

Operations of the replication engine 335 are logged to the replication log 340, allowing the analyzer 330 to use related data in determining whether to continue replication or switch to federation. For example, based on a second frequency at which the data is requested using replication, the analyzer 330 may determine to process further requests for the data using federation instead of replication. The analyzer 330 may determine to process further requests for a subset of the data using federation instead of replication. For example, based on a second frequency at which portions of the first data are requested using replication, the analyzer 330 may reduce an amount of data stored in the local database by using a projection or filter of the first data. Likewise, the analyzer 330 may originally determine to store a projection or filter of a table from the data source 355 or 360 and later determine to store additional data from the table (e.g., a larger projection, a larger filter, or the entire table).

The analyzer 330 may correlate information from the query log 315, the replication log 340, and the federation log 350. The analyzer 330 may also identify commonly used data sets, identify supersets of projections and filters used by different queries, identify correlation between data sets (i.e., which datasets are used together in queries and therefore should be replicated together, if any one of the datasets are replicated).

Furthermore, time-series analysis may be performed by the analyzer 330 to identify how data sets are used over time. For example, queries may retrieve data for today, this week, the last seven days, or another time period that depends on the current day or time. Thus, replicating the useful data will depend on frequently gathering updated data, and local storage can be reduced by deleting data after it has reached the queried age. For example, if "orders from the last week" is used as a filter, new data can be replicated regularly while old data that falls outside of the range would be removed.

In some example embodiments, the analyzer 330 does not toggle between replication and federation automatically. In these embodiments, an administrator may be notified (e.g., by text message or email) of the recommended change. In response, the administrator may, via a user interface, select data to be replicated or federated.

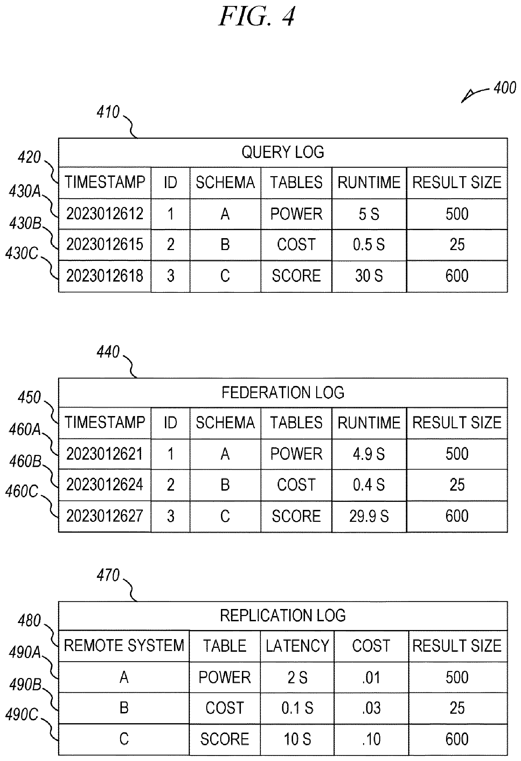

FIG. 4 is a block diagram of an example database schema 400 suitable for use by a system that automatically toggles between replication and federation of data from remote data sources. The database schema 400 includes a query log 410, a federation log 440, and a replication log 470. The query log 410 includes rows 430A, 430B, and 430C of a format 420. The federation log 440 includes rows 460A, 460B, and 460C of a format 450. The replication log 470 includes rows 490A, 490B, and 490C of a format 480.

Each of the rows 430A-430C of the query log 410 stores a timestamp that indicates when the query was received, a unique identifier of the query, a schema or data source to which the query is directed, one or more tables accessed by the query, a runtime of the query, and a result size for the results of the query. Thus, the row 430A stores data for a query with unique identifier 1, received at 2023012612. Query 1 requested 500 rows of data from a power table of schema A (e.g., data stored by the database server 130 of FIG. 1). Servicing the query took 5 seconds. According to the row 430B, query 2 requested 25 rows from a cost table of schema B (e.g., data stored by the data source 150A of FIG. 1). Only a few rows are shown in the query log 410, but multiple queries may be serviced every second with a corresponding row created. Accordingly, a query log with millions of rows, reporting results from queries to hundreds or thousands (or more) schemas and tables, is contemplated.

The federation log 440 stores the same fields as the query log 410, but the rows 460A-460C report data only for queries that were handled using federation. In the example of FIG. 4, each of the queries of the rows 430A-430C were handled by federation and thus have corresponding rows in the federation log 440. The runtime data in the federation log 440 indicates the time elapsed between the sending of the federated request to a remote data source and the receipt of responsive results.

The replication log 470 indicates which remote data has been replicated by the replication engine 220 of FIG. 2 or the replication engine 335 of FIG. 3. Accordingly, each of the rows 490A-490C identifies a remote source from which the data is replicated, the replicated data, a latency between the time at which data is updated at the remote data source and the time at which the data is updated locally, a cost of receiving the data, and a number of results stored.

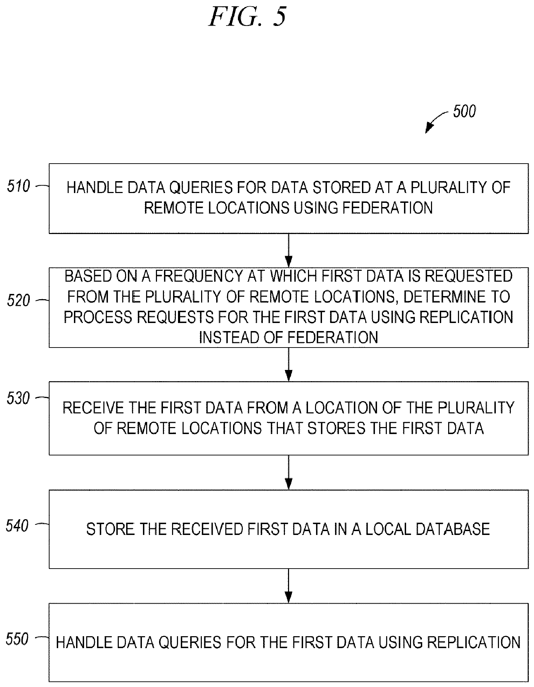

FIG. 5 is a flowchart illustrating operations of an example method 500 suitable for automatically toggling between replication and federation of data from remote data sources. The method 500 includes operations 510, 520, 530, 540, and 550. By way of example and not limitation, the method 500 may be performed by the data access interface 140 of the application server 120 of FIG. 1, using the modules, databases, structures, and images shown in FIGS. 2-4.

In operation 510, the data access interface 140 handles data queries for data stored at a plurality of remote locations using federation. For example, queries for data from the data source 150A and the data source 150B may be handled by forwarding the requests to the data sources 150A-150B, receiving the data from the data sources 150A-150B, and providing the received data in response to the queries.

Based on a frequency at which first data is requested from the plurality of remote locations, the analysis module 230 of FIG. 2 (also shown as the analyzer 330 of FIG. 3) determines, in operation 520, to process requests for the first data using replication instead of federation. For example, the analysis module 230 may retrieve data from the query log 410 and the federation log 440 to determine that the first data is accessed frequently (e.g., more often than a predetermined threshold such as twice per hour) and that the accessing of the first data from the remote location is slow (e.g., takes longer than a predetermined threshold such as five seconds). Based on this data in the query log 410, the analysis module 230 determines, in this example, to process requests for the first data using replication instead of federation.

Different or additional factors may be used in operation 520 to determine whether to process requests for the first data using replication. For example, an amount of network bandwidth consumed per unit time (e.g., MB/hour) in repeatedly retrieving the first data may be multiplied by a first weight to determine a federation cost, and an amount of local storage that would be used by replicating the first data (e.g., MB) may be multiplied by a second weight to determine a replication cost. If the federation cost exceeds the replication cost, the first data is selected for replication. The federation cost may further be based on a network transfer time from the location that stores the first data. For example, a network factor may be determined by multiplying the network transfer time (e.g., in seconds) by a third weight. The network factor may be added to the above-described bandwidth factor to determine the federation cost.

Furthermore, upon determining that first data will be replicated, based on a correlation between queries for the first data and second data, the analysis module 230 may determine to also process requests for the second data using replication instead of federation. For example, first and second data may be retrieved together in a large percentage of queries that access either the first data or the second data. The first data may be accessed from a slow data source, causing the analysis module 230 to determine to replicate the first data. The second data may be from a faster data source, but remote access will still not be as fast as local access. An adjusted first or second weight may be applied in redetermining whether the second data should be replicated, to favor replication to further enhance the performance of queries accessing both the first and second data.

In operation 530, the replication engine 220 of FIG. 2 (also shown as the replication engine 335 of FIG. 3) receives the first data from a location of the plurality of remote locations that stores the first data. For example, the replication engine 335 may request the federation engine 345 to retrieve the first data from the data source 355 or the data source 360, all of FIG. 3, and receive the first data in response.

The replication engine 220, in operation 540, stores the received first data in a local database (e.g., in the shadow table 325 of FIG. 3). The first data may comprise a subset of columns of a remote database table. Accordingly, the storing of the received first data in the local database may comprise storing a projection of the remote database table. The first data may comprise a subset of rows of a remote database table. Accordingly, the storing of the received first data in the local database may comprise storing a filter of the remote database table.

Thereafter, the data access interface 140 handles data queries for the first data using replication (operation 550). By use of the method 500, the application server 120 is enabled to more quickly respond to queries for frequently-used data, improving the performance of applications that use the data.

In view of the above-described implementations of subject matter this application discloses the following list of examples, wherein one feature of an example in isolation or more than one feature of an example, taken in combination and, optionally, in combination with one or more features of one or more further examples are further examples also falling within the disclosure of this application.

Example 1 is a system comprising: a memory that stores instructions; and one or more processors configured by the instructions to perform operations comprising: handling data queries for data stored at a plurality of remote locations using federation by performing operations comprising: determining which remote location stores the data; and requesting the data from the determined remote location; based on a frequency at which first data is requested from the plurality of remote locations, determining to process requests for the first data using replication instead of federation; receiving the first data from a location of the plurality of remote locations that stores the first data; storing the received first data in a local database; and handling data queries for the first data using replication by performing operations comprising: determining that the first data has been replicated; and accessing the first data from the local database.

In Example 2, the subject matter of Example 1, wherein: the receiving of the first data from the location of the plurality of locations that stores the first data comprises receiving a subset of columns of a remote database table; and the storing of the received first data in the local database comprises storing a projection of the remote database table.

In Example 3, the subject matter of Examples 1-2, wherein: the receiving of the first data from the location of the plurality of locations that stores the first data comprises receiving a subset of rows of a remote database table; and the storing of the received first data in the local database comprises storing a filter of the remote database table.

In Example 4, the subject matter of Examples 1-3, wherein the operations further comprise: based on a second frequency at which the first data is requested using replication, determining to process further requests for the first data using federation instead of replication.

In Example 5, the subject matter of Examples 1-4, wherein the operations further comprise: based on a second frequency at which portions of the first data are requested using replication, reducing an amount of data stored in the local database by using a projection of the first data.

In Example 6, the subject matter of Examples 1-5, wherein the operations further comprise: based on a second frequency at which portions of the first data are requested using replication, reducing an amount of data stored in the local database by using a filter of the first data.

In Example 7, the subject matter of Examples 1-6, wherein the determining to process requests for the first data using replication instead of federation is further based on a first weight for network usage and a second weight for local storage.

In Example 8, the subject matter of Examples 1-7, wherein the operations further comprise: based on a correlation between queries for the first data and second data, determining to process requests for the second data using replication instead of federation.

In Example 9, the subject matter of Examples 1-8, wherein the handling of the data queries for the first data comprises providing a virtual table for the first data that allows access to the first data whether the first data is stored remotely or locally.

In Example 10, the subject matter of Examples 1-9, wherein the determining to process requests for the first data using replication instead of federation is further based on a network transfer time from the location that stores the first data.

Example 11 is a non-transitory computer-readable medium that stores instructions that, when executed by one or more processors, cause the one or more processors to perform operations comprising: handling data queries for data stored at a plurality of remote locations using federation by performing operations comprising: determining which remote location stores the data; and requesting the data from the determined remote location; based on a frequency at which first data is requested from the plurality of remote locations, determining to process requests for the first data using replication instead of federation; receiving the first data from a location of the plurality of remote locations that stores the first data; storing the received first data in a local database; and handling data queries for the first data using replication by performing operations comprising: determining that the first data has been replicated; and accessing the first data from the local database.

In Example 12, the subject matter of Example 11, wherein: the receiving of the first data from the location of the plurality of locations that stores the first data comprises receiving a subset of columns of a remote database table; and the storing of the received first data in the local database comprises storing a projection of the remote database table.

In Example 13, the subject matter of Examples 11-12, wherein: the receiving of the first data from the location of the plurality of locations that stores the first data comprises receiving a subset of rows of a remote database table; and the storing of the received first data in the local database comprises storing a filter of the remote database table.

In Example 14, the subject matter of Examples 11-13, wherein the operations further comprise: based on a second frequency at which the first data is requested using replication, determining to process further requests for the first data using federation instead of replication.

In Example 15, the subject matter of Examples 11-14, wherein the operations further comprise: based on a second frequency at which portions of the first data are requested using replication, reducing an amount of data stored in the local database by using a projection of the first data.

In Example 16, the subject matter of Examples 11-15, wherein the operations further comprise: based on a second frequency at which portions of the first data are requested using replication, reducing an amount of data stored in the local database by using a filter of the first data.

In Example 17, the subject matter of Examples 11-16, wherein the determining to process requests for the first data using replication instead of federation is further based on a first weight for network usage and a second weight for local storage.

Example 18 is a method comprising: handling, by one or more processors, data queries for data stored at a plurality of remote locations using federation by performing operations comprising: determining which remote location stores the data; and requesting the data from the determined remote location; based on a frequency at which first data is requested from the plurality of remote locations, determining to process requests for the first data using replication instead of federation; receiving the first data from a location of the plurality of remote locations that stores the first data; storing the received first data in a local database; and handling, by the one or more processors, data queries for the first data using replication by performing operations comprising: determining that the first data has been replicated; and accessing the first data from the local database.

In Example 19, the subject matter of Example 18, wherein the handling of the data queries for the first data comprises providing a virtual table for the first data that allows access to the first data whether the first data is stored remotely or locally.

In Example 20, the subject matter of Examples 18-19, wherein the determining to process requests for the first data using replication instead of federation is further based on a network transfer time from the location that stores the first data.

Example 21 is at least one machine-readable medium including instructions that, when executed by processing circuitry, cause the processing circuitry to perform operations to implement any of Examples 1-20.

Example 22 is an apparatus comprising means to implement any of Examples 1-20.

Example 23 is a system to implement any of Examples 1-20.

Example 24 is a method to implement any of Examples 1-20.

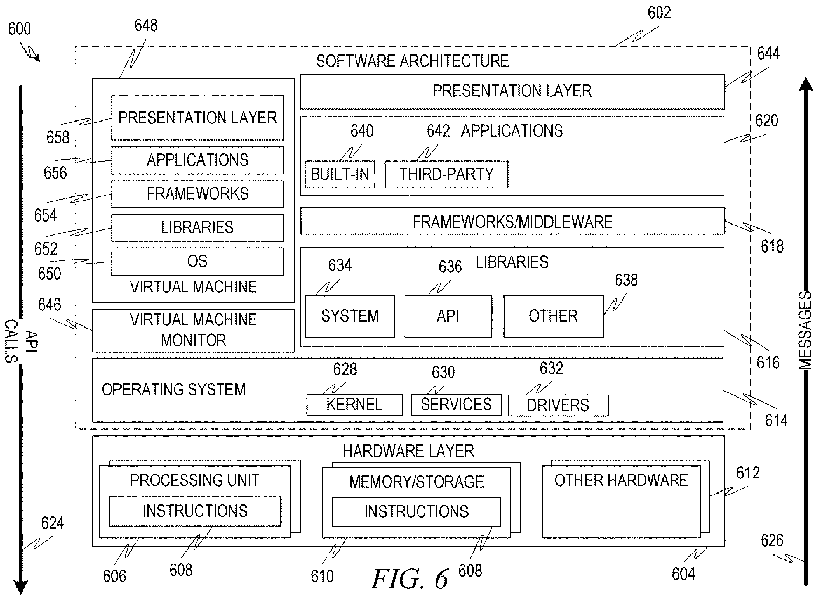

FIG. 6 is a block diagram 600 showing one example of a software architecture 602 for a computing device. The architecture 602 may be used in conjunction with various hardware architectures, for example, as described herein. FIG. 6 is merely a non-limiting example of a software architecture and many other architectures may be implemented to facilitate the functionality described herein. A representative hardware layer 604 is illustrated and can represent, for example, any of the above referenced computing devices. In some examples, the hardware layer 604 may be implemented according to the architecture of the computer system of FIG. 6.

The representative hardware layer 604 comprises one or more processing units 606 having associated executable instructions 608. Executable instructions 608 represent the executable instructions of the software architecture 602, including implementation of the methods, modules, subsystems, and components, and so forth described herein and may also include memory and/or storage modules 610, which also have executable instructions 608. Hardware layer 604 may also comprise other hardware as indicated by other hardware 612 which represents any other hardware of the hardware layer 604, such as the other hardware illustrated as part of the software architecture 602.

In the example architecture of FIG. 6, the software architecture 602 may be conceptualized as a stack of layers where each layer provides particular functionality. For example, the software architecture 602 may include layers such as an operating system 614, libraries 616, frameworks/middleware 618, applications 620, and presentation layer 644. Operationally, the applications 620 and/or other components within the layers may invoke application programming interface (API) calls 624 through the software stack and access a response, returned values, and so forth illustrated as messages 626 in response to the API calls 624. The layers illustrated are representative in nature and not all software architectures have all layers. For example, some mobile or special purpose operating systems may not provide a frameworks/middleware 618 layer, while others may provide such a layer. Other software architectures may include additional or different layers.

The operating system 614 may manage hardware resources and provide common services. The operating system 614 may include, for example, a kernel 628, services 630, and drivers 632. The kernel 628 may act as an abstraction layer between the hardware and the other software layers. For example, the kernel 628 may be responsible for memory management, processor management (e.g., scheduling), component management, networking, security settings, and so on. The services 630 may provide other common services for the other software layers. In some examples, the services 630 include an interrupt service. The interrupt service may detect the receipt of an interrupt and, in response, cause the architecture 602 to pause its current processing and execute an interrupt service routine (ISR) when an interrupt is accessed.

The drivers 632 may be responsible for controlling or interfacing with the underlying hardware. For instance, the drivers 632 may include display drivers, camera drivers, Bluetooth^{®} drivers, flash memory drivers, serial communication drivers (e.g., Universal Serial Bus (USB) drivers), Wi-Fi^{®} drivers, NFC drivers, audio drivers, power management drivers, and so forth depending on the hardware configuration.

The libraries 616 may provide a common infrastructure that may be utilized by the applications 620 and/or other components and/or layers. The libraries 616 typically provide functionality that allows other software modules to perform tasks in an easier fashion than to interface directly with the underlying operating system 614 functionality (e.g., kernel 628, services 630 and/or drivers 632). The libraries 616 may include system libraries 634 (e.g., C standard library) that may provide functions such as memory allocation functions, string manipulation functions, mathematic functions, and the like. In addition, the libraries 616 may include API libraries 636 such as media libraries (e.g., libraries to support presentation and manipulation of various media format such as MPEG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 616 may also include a wide variety of other libraries 638 to provide many other APIs to the applications 620 and other software components/modules.

The frameworks/middleware 618 may provide a higher-level common infrastructure that may be utilized by the applications 620 and/or other software components/modules. For example, the frameworks/middleware 618 may provide various graphic user interface (GUI) functions, high-level resource management, high-level location services, and so forth. The frameworks/middleware 618 may provide a broad spectrum of other APIs that may be utilized by the applications 620 and/or other software components/modules, some of which may be specific to a particular operating system or platform.

The applications 620 include built-in applications 640 and/or third-party applications 642. Examples of representative built-in applications 640 may include, but are not limited to, a contacts application, a browser application, a book reader application, a location application, a media application, a messaging application, and/or a game application. Third-party applications 642 may include any of the built-in applications as well as a broad assortment of other applications. In a specific example, the third-party application 642 (e.g., an application developed using the Android^{™} or iOS^{™} software development kit (SDK) by an entity other than the vendor of the particular platform) may be mobile software running on a mobile operating system such as iOS^{™}, Android^{™}, Windows^{®} Phone, or other mobile computing device operating systems. In this example, the third-party application 642 may invoke the API calls 624 provided by the mobile operating system such as operating system 614 to facilitate functionality described herein.

The applications 620 may utilize built in operating system functions (e.g., kernel 628, services 630 and/or drivers 632), libraries (e.g., system libraries 634, API libraries 636, and other libraries 638), frameworks/middleware 618 to create user interfaces to interact with users of the system. Alternatively, or additionally, in some systems, interactions with a user may occur through a presentation layer, such as presentation layer 644. In these systems, the application/module "logic" can be separated from the aspects of the application/module that interact with a user.

Some software architectures utilize virtual machines. In the example of FIG. 6, this is illustrated by virtual machine 648. A virtual machine creates a software environment where applications/modules can execute as if they were executing on a hardware computing device. A virtual machine is hosted by a host operating system (operating system 614) and typically, although not always, has a virtual machine monitor 646, which manages the operation of the virtual machine 648 as well as the interface with the host operating system (i.e., operating system 614). A software architecture executes within the virtual machine 648 such as an operating system 650, libraries 652, frameworks/middleware 654, applications 656 and/or presentation layer 658. These layers of software architecture executing within the virtual machine 648 can be the same as corresponding layers previously described or may be different.

### MODULES, COMPONENTS AND LOGIC

A computer system may include logic, components, modules, mechanisms, or any suitable combination thereof. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. One or more computer systems (e.g., a standalone, client, or server computer system) or one or more hardware processors may be configured by software (e.g., an application or application portion) as a hardware-implemented module that operates to perform certain operations as described herein.

A hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or another programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired), or temporarily or transitorily configured (e.g., programmed) to operate in a certain manner and/or to perform certain operations described herein. Hardware-implemented modules may be temporarily configured (e.g., programmed), and each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses that connect the hardware-implemented modules). Multiple hardware-implemented modules are configured or instantiated at different times. Communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. The processor or processors may be located in a single location (e.g., within a home environment, an office environment, or a server farm), or the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., APIs).

### ELECTRONIC APPARATUS AND SYSTEM

The systems and methods described herein may be implemented using digital electronic circuitry, computer hardware, firmware, software, a computer program product (e.g., a computer program tangibly embodied in an information carrier, e.g., in a machine-readable medium for execution by, or to control the operation of, data processing apparatus, e.g., a programmable processor, a computer, or multiple computers), or any suitable combination thereof.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites (e.g., cloud computing) and interconnected by a communication network. In cloud computing, the server-side functionality may be distributed across multiple computers connected by a network. Load balancers are used to distribute work between the multiple computers. Thus, a cloud computing environment performing a method is a system comprising the multiple processors of the multiple computers tasked with performing the operations of the method.

Operations may be performed by one or more programmable processors executing a computer program to perform functions by operating on input data and generating output. Method operations can also be performed by, and apparatus of systems may be implemented as, special purpose logic circuitry, e.g., an FPGA or an ASIC.

The computing system can include clients and servers. A client and server are generally remote from each other and typically interact through a communication network. The relationship of client and server arises by virtue of computer programs running on the respective computers and having a client-server relationship to each other. A programmable computing system may be deployed using hardware architecture, software architecture, or both. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out example hardware (e.g., machine) and software architectures that may be deployed.

### EXAMPLE MACHINE ARCHITECTURE AND MACHINE-READABLE MEDIUM

FIG. 7 is a block diagram of a machine in the example form of a computer system 700 within which instructions 724 may be executed for causing the machine to perform any one or more of the methodologies discussed herein. The machine may operate as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 700 includes a processor 702 (e.g., a central processing unit (CPU), a graphics processing unit (GPU), or both), a main memory 704, and a static memory 706, which communicate with each other via a bus 708. The computer system 700 may further include a video display unit 710 (e.g., a liquid crystal display (LCD) or a cathode ray tube (CRT)). The computer system 700 also includes an alphanumeric input device 712 (e.g., a keyboard or a touch-sensitive display screen), a user interface (UI) navigation (or cursor control) device 714 (e.g., a mouse), a storage unit 716, a signal generation device 718 (e.g., a speaker), and a network interface device 720.

### MACHINE-READABLE MEDIUM

The storage unit 716 includes a machine-readable medium 722 on which is stored one or more sets of data structures and instructions 724 (e.g., software) embodying or utilized by any one or more of the methodologies or functions described herein. The instructions 724 may also reside, completely or at least partially, within the main memory 704 and/or within the processor 702 during execution thereof by the computer system 700, with the main memory 704 and the processor 702 also constituting machine-readable media 722.

While the machine-readable medium 722 is shown in FIG. 7 to be a single medium, the term "machine-readable medium" may include a single medium or multiple media (e.g., a centralized or distributed database, and/or associated caches and servers) that store the one or more instructions 724 or data structures. The term "machine-readable medium" shall also be taken to include any tangible medium that is capable of storing, encoding, or carrying instructions 724 for execution by the machine and that cause the machine to perform any one or more of the methodologies of the present disclosure, or that is capable of storing, encoding, or carrying data structures utilized by or associated with such instructions 724. The term "machine-readable medium" shall accordingly be taken to include, but not be limited to, solid-state memories, and optical and magnetic media. Specific examples of machine-readable media 722 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magneto-optical disks; and compact disc read-only memory (CD-ROM) and digital versatile disc read-only memory (DVD-ROM )disks. A machine-readable medium is not a transmission medium.

### TRANSMISSION MEDIUM

The instructions 724 may further be transmitted or received over a communications network 726 using a transmission medium. The instructions 724 may be transmitted using the network interface device 720 and any one of a number of well-known transfer protocols (e.g., hypertext transport protocol (HTTP)). Examples of communication networks include a local area network (LAN), a wide area network (WAN), the Internet, mobile telephone networks, plain old telephone (POTS) networks, and wireless data networks (e.g., WiFi and WiMax networks). The term "transmission medium" shall be taken to include any intangible medium that is capable of storing, encoding, or carrying instructions 724 for execution by the machine, and includes digital or analog communications signals or other intangible media to facilitate communication of such software.

Although specific examples are described herein, it will be evident that various modifications and changes may be made to these examples without departing from the broader spirit and scope of the disclosure. Accordingly, the specification and drawings are to be regarded in an illustrative rather than a restrictive sense. The accompanying drawings that form a part hereof show by way of illustration, and not of limitation, specific examples in which the subject matter may be practiced. The examples illustrated are described in sufficient detail to enable those skilled in the art to practice the teachings disclosed herein.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance. Finally, as used herein, the conjunction "or" refers to a non-exclusive "or," unless specifically stated otherwise.

In view of the above, the present application may disclose the following items:
Item 1. A system comprising:
   a memory that stores instructions; and
   one or more processors configured by the instructions to perform operations comprising:
      handling data queries for data stored at a plurality of remote locations using federation by performing operations comprising:
         determining which remote location stores the data; and
         requesting the data from the determined remote location;
      based on a frequency at which first data is requested from the plurality of remote locations, determining to process requests for the first data using replication instead of federation;
      receiving the first data from a location of the plurality of remote locations that stores the first data;
      storing the received first data in a local database; and
      handling data queries for the first data using replication by performing operations comprising:
         determining that the first data has been replicated; and
         accessing the first data from the local database.
Item 2. The system of item 1, wherein:
   the receiving of the first data from the location of the plurality of locations that stores the first data comprises receiving a subset of columns of a remote database table; and
   the storing of the received first data in the local database comprises storing a projection of the remote database table.
Item 3. The system of item1 or item 2, wherein:
   the receiving of the first data from the location of the plurality of locations that stores the first data comprises receiving a subset of rows of a remote database table; and
   the storing of the received first data in the local database comprises storing a filter of the remote database table.
Item 4. The system of any one of the preceding items, wherein the operations further comprise:
   based on a second frequency at which the first data is requested using replication, determining to process further requests for the first data using federation instead of replication.
Item 5. The system of any one of the preceding items, wherein the operations further comprise:
   based on a second frequency at which portions of the first data are requested using replication, reducing an amount of data stored in the local database by using a projection of the first data.
Item 6. The system of any one of the preceding items, wherein the operations further comprise:
   based on a second frequency at which portions of the first data are requested using replication, reducing an amount of data stored in the local database by using a filter of the first data.
Item 7. The system of any one of the preceding items, wherein the determining to process requests for the first data using replication instead of federation is further based on a first weight for network usage and a second weight for local storage.
Item 8. The system of any one of the preceding items, wherein the operations further comprise:
   based on a correlation between queries for the first data and second data, determining to process requests for the second data using replication instead of federation.
Item 9. The system of any one of the preceding items, wherein the handling of the data queries for the first data comprises providing a virtual table for the first data that allows access to the first data whether the first data is stored remotely or locally.
Item 10. The system of any one of the preceding items, wherein the determining to process requests for the first data using replication instead of federation is further based on a network transfer time from the location that stores the first data.
Item 11. A non-transitory computer-readable medium that stores instructions that, when executed by one or more processors, cause the one or more processors to perform operations comprising:
   handling data queries for data stored at a plurality of remote locations using federation by performing operations comprising:
      determining which remote location stores the data; and
      requesting the data from the determined remote location;
   based on a frequency at which first data is requested from the plurality of remote locations, determining to process requests for the first data using replication instead of federation;
   receiving the first data from a location of the plurality of remote locations that stores the first data;
   storing the received first data in a local database; and
   handling data queries for the first data using replication by performing operations comprising:
      determining that the first data has been replicated; and
      accessing the first data from the local database.
Item 12. The non-transitory computer-readable medium of item 11, wherein:
   the receiving of the first data from the location of the plurality of locations that stores the first data comprises receiving a subset of columns of a remote database table; and
   the storing of the received first data in the local database comprises storing a projection of the remote database table.
Item 13. The non-transitory computer-readable medium of item 11 or item 12, wherein:
   the receiving of the first data from the location of the plurality of locations that stores the first data comprises receiving a subset of rows of a remote database table; and
   the storing of the received first data in the local database comprises storing a filter of the remote database table.
Item 14. The non-transitory computer-readable medium of any one of items 11 to 13, wherein the operations further comprise:
   based on a second frequency at which the first data is requested using replication, determining to process further requests for the first data using federation instead of replication.
Item 15. The non-transitory computer-readable medium of any one of items 11 to 14, wherein the operations further comprise:
   based on a second frequency at which portions of the first data are requested using replication, reducing an amount of data stored in the local database by using a projection of the first data.
Item 16. The non-transitory computer-readable medium of any one of items 11 to 15, wherein the operations further comprise:
   based on a second frequency at which portions of the first data are requested using replication, reducing an amount of data stored in the local database by using a filter of the first data.
Item 17. The non-transitory computer-readable medium of any one of items 11 to 16, wherein the determining to process requests for the first data using replication instead of federation is further based on a first weight for network usage and a second weight for local storage.
Item 18. A method comprising:
   handling, by one or more processors, data queries for data stored at a plurality of remote locations using federation by performing operations comprising:
      determining which remote location stores the data; and
      requesting the data from the determined remote location;
   based on a frequency at which first data is requested from the plurality of remote locations, determining to process requests for the first data using replication instead of federation;
   receiving the first data from a location of the plurality of remote locations that stores the first data;
   storing the received first data in a local database; and
   handling, by the one or more processors, data queries for the first data using replication by performing operations comprising:
      determining that the first data has been replicated; and
      accessing the first data from the local database.
Item 19. The method of item 18, wherein the handling of the data queries for the first data comprises providing a virtual table for the first data that allows access to the first data whether the first data is stored remotely or locally.
Item 20. The method of item 18 or item 19, wherein the determining to process requests for the first data using replication instead of federation is further based on a network transfer time from the location that stores the first data.

## Claims

1. A system comprising:
a memory that stores instructions; and
one or more processors configured by the instructions to perform operations comprising:
handling data queries for data stored at a plurality of remote locations using federation by performing operations comprising:
determining which remote location stores the data; and
requesting the data from the determined remote location;
based on a frequency at which first data is requested from the plurality of remote locations, determining to process requests for the first data using replication instead of federation;
receiving the first data from a location of the plurality of remote locations that stores the first data;
storing the received first data in a local database; and
handling data queries for the first data using replication by performing operations comprising:
determining that the first data has been replicated; and
accessing the first data from the local database.

2. The system of claim 1, wherein:
the receiving of the first data from the location of the plurality of locations that stores the first data comprises receiving a subset of columns of a remote database table; and
the storing of the received first data in the local database comprises storing a projection of the remote database table.

3. The system of claim 1 or claim 2, wherein:
the receiving of the first data from the location of the plurality of locations that stores the first data comprises receiving a subset of rows of a remote database table; and
the storing of the received first data in the local database comprises storing a filter of the remote database table.

4. The system of any one of the preceding claims, wherein the operations further comprise:
based on a second frequency at which the first data is requested using replication, determining to process further requests for the first data using federation instead of replication;
and/or
wherein the operations further comprise:
based on a second frequency at which portions of the first data are requested using replication, reducing an amount of data stored in the local database by using a projection of the first data.

5. The system of any one of the preceding claims, wherein the operations further comprise:
based on a second frequency at which portions of the first data are requested using replication, reducing an amount of data stored in the local database by using a filter of the first data.

6. The system of any one of the preceding claims, wherein the determining to process requests for the first data using replication instead of federation is further based on a first weight for network usage and a second weight for local storage;
and/or
wherein the operations further comprise:
based on a correlation between queries for the first data and second data, determining to process requests for the second data using replication instead of federation.

7. The system of any one of the preceding claims, wherein the handling of the data queries for the first data comprises providing a virtual table for the first data that allows access to the first data whether the first data is stored remotely or locally;
and/or
wherein the determining to process requests for the first data using replication instead of federation is further based on a network transfer time from the location that stores the first data.

8. A non-transitory computer-readable medium that stores instructions that, when executed by one or more processors, cause the one or more processors to perform operations comprising:
handling data queries for data stored at a plurality of remote locations using federation by performing operations comprising:
determining which remote location stores the data; and
requesting the data from the determined remote location;
based on a frequency at which first data is requested from the plurality of remote locations, determining to process requests for the first data using replication instead of federation;
receiving the first data from a location of the plurality of remote locations that stores the first data;
storing the received first data in a local database; and
handling data queries for the first data using replication by performing operations comprising:
determining that the first data has been replicated; and
accessing the first data from the local database.

9. The non-transitory computer-readable medium of claim 8, wherein:
the receiving of the first data from the location of the plurality of locations that stores the first data comprises receiving a subset of columns of a remote database table; and
the storing of the received first data in the local database comprises storing a projection of the remote database table.

10. The non-transitory computer-readable medium of claim 8 or claim 9, wherein:
the receiving of the first data from the location of the plurality of locations that stores the first data comprises receiving a subset of rows of a remote database table; and
the storing of the received first data in the local database comprises storing a filter of the remote database table.

11. The non-transitory computer-readable medium of any one of claims 8 to 10 , wherein the operations further comprise:
based on a second frequency at which the first data is requested using replication, determining to process further requests for the first data using federation instead of replication;
and/or
wherein the operations further comprise:
based on a second frequency at which portions of the first data are requested using replication, reducing an amount of data stored in the local database by using a projection of the first data.

12. The non-transitory computer-readable medium of any one of claims 8 to 11, wherein the operations further comprise:
based on a second frequency at which portions of the first data are requested using replication, reducing an amount of data stored in the local database by using a filter of the first data.

13. The non-transitory computer-readable medium of any one of claims 8 to 12, wherein the determining to process requests for the first data using replication instead of federation is further based on a first weight for network usage and a second weight for local storage.

14. A method comprising:
handling, by one or more processors, data queries for data stored at a plurality of remote locations using federation by performing operations comprising:
determining which remote location stores the data; and
requesting the data from the determined remote location;
based on a frequency at which first data is requested from the plurality of remote locations, determining to process requests for the first data using replication instead of federation;
receiving the first data from a location of the plurality of remote locations that stores the first data;
storing the received first data in a local database; and
handling, by the one or more processors, data queries for the first data using replication by performing operations comprising:
determining that the first data has been replicated; and
accessing the first data from the local database.

15. The method of claim 14, wherein the handling of the data queries for the first data comprises providing a virtual table for the first data that allows access to the first data whether the first data is stored remotely or locally;
and/or
wherein the determining to process requests for the first data using replication instead of federation is further based on a network transfer time from the location that stores the first data.
